(19) **Europäisches Patentamt / European Patent Office / Office européen des brevets**

(11) **EP 2 439 541 B1**

(12) **FASCICULE DE BREVET EUROPEEN**

(45) Date de publication et mention de la délivrance du brevet:
**12.02.2014 Bulletin 2014/07**

(51) Int Cl.:
*G01S 17/95* (2006.01)  *G01S 17/87* (2006.01)
*G01P 5/26* (2006.01)  *G01P 13/02* (2006.01)
*G01S 17/58* (2006.01)

(21) Numéro de dépôt: **11184262.1**

(22) Date de dépôt: **07.10.2011**

(54) **Système pour la détermination de la vitesse air d'un aéronef**

System zur Bestimmung der Luftgeschwindigkeit eines Flugzeugs

System for determining the air speed of an aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2010 FR 1003994**

(43) Date de publication de la demande:
**11.04.2012 Bulletin 2012/15**

(73) Titulaire: **Thales**
**92200 Neuilly Sur Seine (FR)**

(72) Inventeur: **Mandle, Jacques**
**41100 Naveil (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**EP-A1- 0 703 468**    **FR-A1- 2 891 409**
**FR-A1- 2 922 314**    **FR-A1- 2 938 924**

## Description

L'invention se situe dans le domaine des mesures embarquées anémométriques des aéronefs à voilure fixe.

Les mesures embarquées anémométriques visent à déterminer notamment les valeurs suivantes situées à l'infini amont : la vitesse air vraie (ou TAS pour True Air Speed), l'incidence, le dérapage, la vitesse conventionnelle et la pression statique de l'aéronef ou l'altitude pression.

On rappelle que :

- la vitesse air vraie V est la vitesse d'un aéronef par rapport à l'air non perturbé,
- l'incidence est l'angle $\alpha$ formé entre le vecteur vitesse V de l'aéronef et l'axe longitudinal,
- le dérapage est l'angle entre le vecteur vitesse V et le plan de symétrie (plan vertical) de l'aéronef,
- la pression statique Ps est une pression mesurée par exemple par une prise de pression statique,
- la pression d'arrêt (Pt) est la pression mesurée par un tube de Pitot, par exemple,
- la vitesse conventionnelle Vc est la vitesse utilisée pour déterminer la vitesse de décrochage de l'aéronef (c'est la vitesse qu'aurait l'aéronef, au niveau du sol, en conditions standards, avec la même mesure de pression Pt moins Ps), et
- l'altitude pression est l'altitude correspondant à la pression statique dans la table d'atmosphère standard définie par l'Organisation de l'Aéronautique Civile Internationale.

Ces valeurs correspondent à l'infini amont de l'appareil. L'infini amont est une distance suffisamment grande (par exemple six diamètres de fuselage de l'aéronef) en amont de l'aéronef tel que le déplacement d'air induit par le déplacement dudit l'aéronef ne perturbe pas le champ aérodynamique.

Les systèmes actuels déterminent ces valeurs à l'infini amont à l'aide de mesures locales de clinométrie et d'anémométrie. Ces mesures locales sont réalisées au voisinage du fuselage et sont donc soumises aux perturbations générées par celui-ci.

Les perturbations induites par l'aéronef peuvent être calculées pour corriger les mesures locales de manière adéquate. Pour établir ces corrections, il est nécessaire de procéder à un étalonnage préalable lors d'essais en vol réalisés par le constructeur.

Les systèmes selon l'art connu pour déterminer l'anémométrie d'un aéronef comprennent :

- une sonde d'incidence placée à un endroit particulier (incidence locale insensible au dérapage) et mesurant une incidence locale $\alpha_{loc}$,
- éventuellement une sonde de dérapage mesurant un dérapage local $\beta_{loc}$,
- un tube de Pitot mesurant une pression d'arrêt Pt, et

- une paire de prises de pression statiques gauche-droite placées à des endroits particuliers (où la pression statique moyenne G/D (gauche-droite) ne dépend pas du dérapage, et pour laquelle on effectue une moyenne pneumatique des pressions G/D, que l'on corrige par des lois de type « SSEC » (pour Static Source Error Correction), pour calculer la pression statique locale Ps, et
- une sonde pour mesurer une température d'impact Ti (ou TAT pour Total Air Temperature) qui est la température due à l'échauffement cinétique lors du déplacement de l'aéronef.

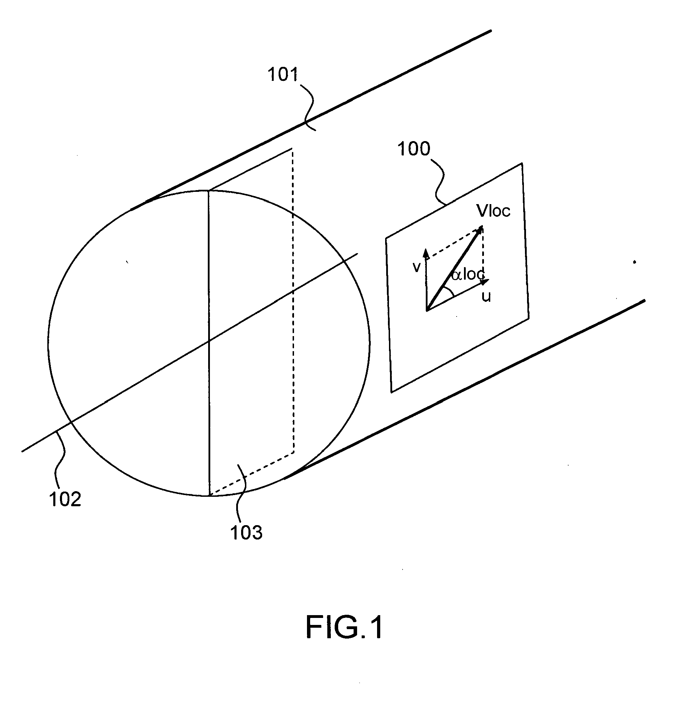

La figure 1 illustre une incidence locale aux abords d'un fuselage d'un aéronef. Cette figure représente un plan tangent 100 à un fuselage 101 (supposé cylindrique) d'un aéronef. L'aéronef présente un axe longitudinal 102 et un plan de symétrie 103.

On rappelle que l'incidence locale $\alpha_{loc}$ est un angle entre, d'une part, un vecteur d'une vitesse $V_{loc}$ mesurée localement (c'est-à-dire aux abords du fuselage) dans le plan tangent 100 au fuselage 101 et, d'autre part, un vecteur u situé dans le plan tangent et parallèle à l'axe longitudinal de l'aéronef 102.

La sonde mesurant l'incidence locale $\alpha_{loc}$ est par exemple une palette (c'est-à-dire une petite ailette mobile) s'alignant dans le lit du vent.

De façon alternative, l'incidence locale $\alpha_{loc}$ peut aussi être déterminée indirectement en effectuant deux mesures :

- une mesure du vecteur vitesse u situé dans le plan tangent 100 et parallèle à l'axe longitudinal de l'aéronef 102, et
- une mesure d'un vecteur vitesse v situé dans le plan tangent 100 et orthogonal au vecteur vitesse u.

L'incidence locale $\alpha_{loc}$ est alors déterminée à partir de ces deux valeurs en appliquant la formule suivante : $\alpha_{loc} = \mathrm{Tan}^{-1}(v/u)$

Comme pour l'incidence locale, on peut mesurer le dérapage directement, à l'aide d'une palette s'alignant dans le lit du vent.

On peut aussi déterminer le dérapage à partir du ratio de deux composantes mesurées.

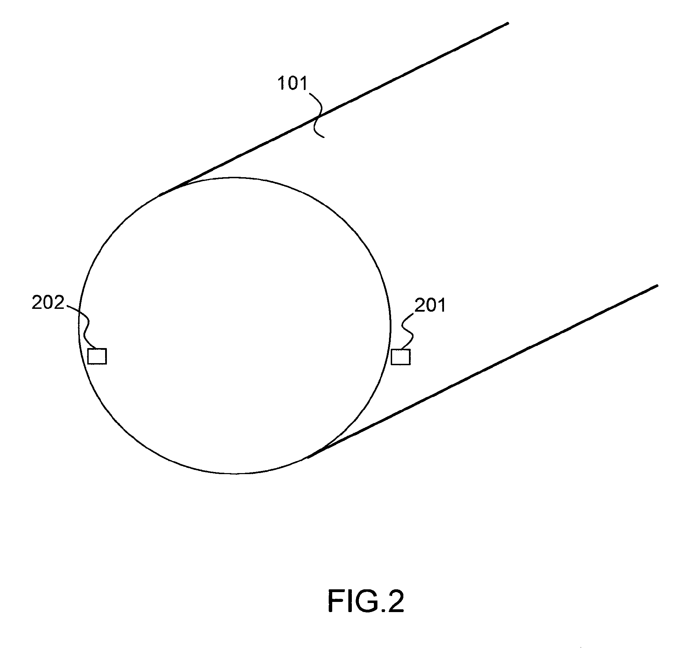

La figure 2 présente un exemple de dispositif selon l'art connu pour déterminer l'incidence et le dérapage d'un aéronef à partir de mesures locales d'incidence.

Ce dispositif comprend une première palette 201 située sur un coté du fuselage 101 et une deuxième palette 202 situé sur un autre coté du fuselage symétrique à la première palette par rapport au plan de symétrie de l'aéronef. La première palette 201 mesurant un premier angle d'incidence locale $\alpha_{locG}$ et la deuxième palette 202 un deuxième angle d'incidence locale $\alpha_{locD}$. L'incidence $\alpha$ et le dérapage $\alpha$ à l'infini amont de l'aéronef peuvent alors être déterminés à l'aide des mesures locales précédentes en appliquant les relations suivantes:

$$\alpha = f((\alpha locD + \alpha locG)/2)$$

$$\beta = g((\alpha locD - \alpha locG)/2)$$

Où f et g sont des fonctions dépendant des caractéristiques aérodynamiques de l'aéronef et prenant en compte les corrections liés aux perturbations évoquées précédemment.

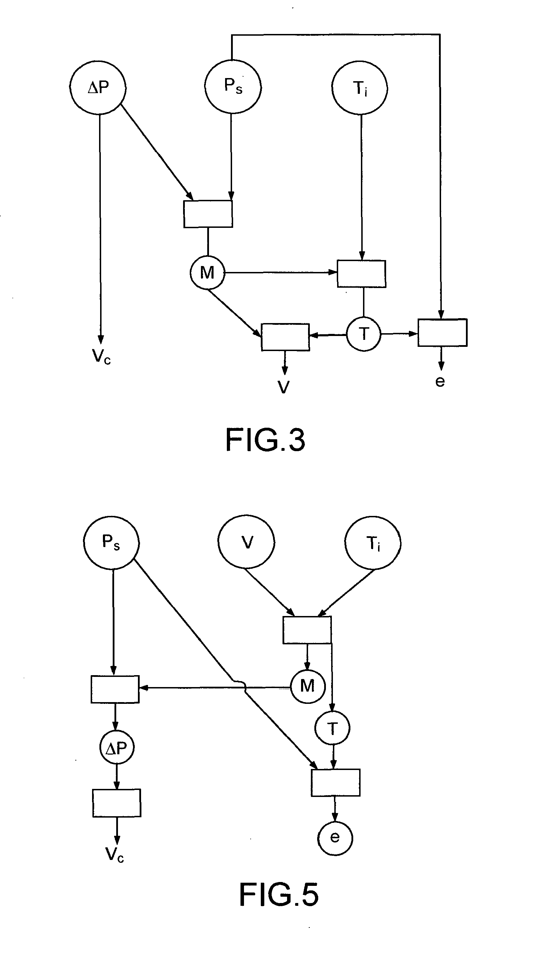

La figure 3 présente la façon dont sont déterminés les paramètres anémométriques à partir des mesures locales effectuées.

La vitesse conventionnelle Vc est déduite de la différence $\Delta P$ entre la pression d'arrêt Pt et la pression statique locale Ps.

Le nombre de Mach M est déterminé à partir du ratio entre, d'une part, la différence $\Delta P$ entre la pression d'arrêt Pt et la pression statique locale Ps et, d'autre part, la pression statique locale Ps.

La température statique T est déterminée à partir de la température d'impact Ti et du nombre de mach M

Le nombre de mach M et la température statique T permettent alors de calculer le module du vecteur vitesse air vrai V.

La pression statique locale Ps et la température statique T permettent alors de calculer la masse volumique de l'air e.

Le module du vecteur vitesse air vraie, l'angle d'incidence et l'angle de dérapage à l'infini amont de l'aéronef permettent de définir entièrement le vecteur vitesse air vraie de l'aéronef.

Ces systèmes ont pour inconvénients notamment d'avoir recours à des instruments de mesures, par exemple les palettes, fragiles car légères et particulièrement sensible au givrage.

Ces systèmes sont en outre complexes à installer car les instruments de mesures doivent en outre être placés à des points spécifiques du fuselage de l'aéronef pour minimiser les erreurs de mesures liées aux perturbations.

On connaît déjà un système de mesure de la vitesse air vraie d'un aéronef à l'aide d'un anémomètre laser focalisant à une grande distance du fuselage (au moins 100m) et réalisant au moins trois mesures en trois points différents de l'espace. Cependant un tel système a pour inconvénient de nécessité un laser puissant et avec une large ouverture. De plus, la détermination de trois points de mesure appropriés peut être difficile.

Le document FR 2 938 924 A1 divulgue un système pour la détermination du vecteur vitesse air vraie comportant quatre anémomètres lasers, chacun pourvu d'une unique voie de mesure pour mesurer une composante locale de la vitesse air vraie et étant répartis dans des localisations différentes autour du fuselage de l'aéronef, chacun des anémomètres lasers émettant un rayonnement laser à une distance prédéterminée de quelques mètres ou de quelques dizaines de mètres au-delà de l'aéronef.

Le document FR 2 891 409 A1 décrit un système d'anémométrie laser qui présente une meilleure sensibilité permettant un fonctionnement à haute altitude avec un signal optique incident d'énergie réduite et ayant une zone de focalisation étant distante de cinquante centimètres.

L'invention vise notamment à pallier les problèmes cités précédemment en proposant un système pour la détermination de la vitesse air d'un aéronef plus fiable et plus facile installer sur le fuselage de l'aéronef.

L'invention facilite ainsi la mise en oeuvre des mesures de paramètres anémométriques.

A cet effet, l'invention a pour objet un système pour la détermination du vecteur vitesse air vraie, défini par un module et par une direction, d'un aéronef comportant un fuselage, ledit système comportant les caractéristiques de la revendication 1.

La solution de l'invention utilise des anémomètres à laser capables de faire des mesures selon un axe de visée (grâce à la mesure selon l'effet Doppler) pour déterminer l'incidence et le dérapage.

L'anémomètre à laser présente des avantages au niveau sécurité (pas de risque de givrage, de dissemblance par rapport à un système classique, fiabilité, insensibilité aux aérosols).

L'invention permet de ne pas utiliser de sonde d'incidence, de sonde et de tube Pitot fragiles et protubérants. Ces équipements, particulièrement sensibles au givre, sont remplacés par des anémomètres lasers plus résistants et non protubérants.

Avantageusement, le premier et le deuxième des six anémomètres lasers sont situées sensiblement dans le plan horizontal de l'aéronef et de façon symétrique par rapport à l'axe longitudinal de l'aéronef.

Avantageusement, le troisième et le quatrième des six anémomètres lasers sont situées sensiblement dans le plan vertical de l'aéronef et de façon symétrique par rapport à l'axe longitudinal de l'aéronef.

Avantageusement, l'axe selon lequel est effectué la mesure est un axe situé dans un plan parallèle au plan tangent au fuselage, ledit axe de mesure formant un angle D avec l'axe situé dans plan parallèle au plan tangent au fuselage et parallèle à l'axe longitudinal du fuselage.

Avantageusement, l'angle D entre l'axe de mesure et l'axe situé dans plan parallèle au plan tangent au fuselage et parallèle à l'axe longitudinal du fuselage est sensiblement égal à 45 degrés.

Avantageusement, les anémomètres lasers sont fibrés, chacun des anémomètres lasers étant relié, par une fibre optique, à une même source de puissance.

L'invention sera mieux comprise et d'autres avantages apparaîtront à la lecture de la description détaillée faite à titre d'exemple non limitatif et à l'aide des figures parmi lesquelles :

La figure 1, déjà présentée, illustre une incidence locale aux abords d'un fuselage d'un aéronef.

La figure 2, déjà présentée, présente un exemple de dispositif selon l'art connu pour déterminer l'incidence et le dérapage d'un aéronef à partir de mesures locales d'incidence et de dérapage.

La figure 3, déjà présentée, présente la façon dont sont déterminés les paramètres anémométriques à partir des mesures locales effectuées.

La figure 4 présente un exemple de mise en oeuvre du système de mesure selon l'invention.

La figure 5 présente la façon dont sont déterminés les paramètres anémométriques à partir des mesures locales effectuées.

L'invention permet de caractériser entièrement le vecteur vitesse de l'aéronef, c'est-à-dire, son module et sa direction (à l'aide de l'incidence et du dérapage) à partir d'au moins quatre mesures de composante de vitesse locale.

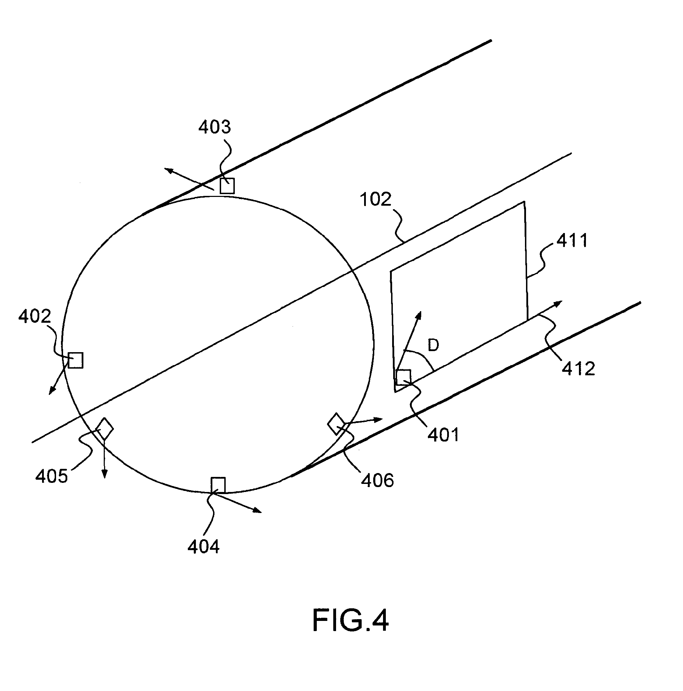

La figure 4 présente un exemple de mise en oeuvre du système de mesure selon l'invention.

Le système comprend six anémomètres 401, 402, 403, 404, 405, 406, lasers répartis autour du fuselage 101 de l'aéronef mesurant une composante de la vitesse air vraie et étant répartis dans des localisations différentes autour du fuselage 101 de l'aéronef.

Le système comprend aussi des moyens pour le calcul de la vitesse air vraie de l'aéronef à partir des six mesures de composante locale de la vitesse air vraie.

Le cinquième anémomètre 405 est situé à mi-distance entre le deuxième et le quatrième et le sixième anémomètre 406 situé à mi-distance entre le quatrième et le premier.

Les anémomètres étant alors situés sous le fuselage de l'aéronef et donc protégés des intempéries.

Le positionnement à mi distance des autres anémomètres permet de faciliter les calculs effectués sur les mesures.

Cette configuration redondante a pour avantage de pouvoir détecter une panne de l'un des anémomètres laser.

Les anémomètres sont configurés pour réaliser des mesures locales. Les lasers focalisent à une distance proche du fuselage, inférieure à 1 mètre, et par exemple comprise entre 10 et 50 cm pour un fuselage dont le diamètre est compris en 4 mètres et 8 mètres. Ceci permet d'utiliser des lasers à faible puissance qui sont moins coûteux et moins volumineux que des lasers pouvant focaliser à des distances plus importantes.

Chacun des anémomètres laser ne présente qu'une unique voie de mesure, c'est-à-dire qu'il n'effectue une mesure de vitesse que selon un seul axe. Ainsi, à un instant donné, on obtient un jeu de six composantes locales de la vitesse air qui sont utilisées pour déterminer le module du vecteur vitesse air vraie, l'incidence et le dérapage.

De façon avantageuse, le premier 401 et le deuxième 402 des six anémomètres sont situés sensiblement dans le plan horizontal de l'aéronef et de façon symétrique par rapport à l'axe longitudinal 102 de l'aéronef ; le troisième 403 et le quatrième 404 des quatre anémomètres sont situés sensiblement dans le plan vertical de l'aéronef et de façon symétrique par rapport à l'axe longitudinal 102 de l'aéronef.

Ce mode de réalisation particulier permet de faciliter les calculs de détermination du vecteur vitesse à partir des mesures.

L'axe selon lequel est effectué la mesure est un axe situé dans un plan 411 sensiblement parallèle au plan tangent au fuselage. Cet axe forme un angle D avec l'axe 412 situé dans le plan 411 sensiblement parallèle au plan tangent au fuselage et parallèle à l'axe longitudinal du fuselage.

La valeur de l'angle D est significativement supérieure à 0, afin de ne pas être dans l'axe de déplacement de l'avion

D peut être par exemple de l'ordre de 45°.

L'important est de faire une mesure à quelques dizaines de centimètres de l'émetteur (Par émetteur, on entend la lentille d'émission du faisceau laser), dans un plan quasi tangent (en étant situé a quelques centimètres de la paroi pour être situé en dehors de la couche limite qui se développe sur le fuselage de l'aéronef). Ceci est valable pour les valeurs de diamètre de fuselage d'un avion de transport, c'est à dire de 2 à 8 m de diamètre environs.

La figure 5 présente la façon dont sont déterminés les paramètres anémométriques à partir des mesures locales effectuées.

Le vecteur de la vitesse air vraie à l'infini amont V est calculée à partir des composantes de vitesse air vrai mesurées par les anémomètres laser. Cependant, ces mesures sont fortement perturbées par la présence du fuselage. Une correction est donc nécessaire.

Un étalonnage préalable en vol (en phase développement de l'aéronef) est donc nécessaire, après, une première estimation théorique résultant de calculs de mécanique des fluides sur la portion de fuselage considérée.

Il est important d'explorer l'ensemble du domaine de vol de l'aéronef, en incidence, dérapage, vitesse et altitude, et d'enregistrer les différentes mesures, avec une référence de vitesse qui est déterminée, par exemple par un anémomètre laser focalisant à distance moyenne (une centaine de mètres), et une référence de pression statique qui peut être classiquement un cône tracté (permettant d'éviter les perturbations dues au fuselage) ou une méthode indirecte à base de mesure d'altitude provenant de radio navigation (GPS par exemple), le vent étant estimé par des lâchers de ballons-sondes.

On peut donc alors enregistrer l'ensemble des paramètres (4 ou 6 vitesses locales, pressions statiques, température) en fonction des paramètres de référence (incidence, dérapage, nombre de Mach, vitesse conventionnelle, et altitude pression) et ainsi obtenir un tableau de correspondance permettant de fournir les coefficients d'étalonnage du système anémométrique.

Les moyens pour le calcul de la vitesse air vraie de l'aéronef mettent en oeuvre un tel tableau pour établir la vitesse air vraie à partir des six mesures de composante locales de la vitesse air vraie.

En tout point exploré du domaine de vol (altitude, nombre de Mach, incidence et dérapage), on enregistre les mesures locales et la mesure de référence (c'est-à-dire le vecteur vitesse air vraie définie par son module un angle d'incidence et un angle de dérapage). Chaque mesure locale Ui, issue d'un anémomètre laser, dépend du module de la vitesse infini amont V, de l'incidence et du dérapage.

On détermine ensuite à l'aide de ces mesures des courbes de mesure locale Ui fonction, par exemple, d'un angle d'incidence et pour des modules de vitesses constants et des dérapages constants.

Des quatre réseaux de courbes Ui, (ix1,2,3,4) on déduit alors les valeurs attendues du vecteur vitesse air (module et incidence et dérapage). Il n'y a pas à proprement parler de correction, mais modélisation entre les mesures locales et le vecteur vitesse air.

L'ajout des autres deux valeurs permet soit de lever des ambigüités si les courbes précédentes ne permettent de trouver une seule solution, soit de sécuriser l'information par détection de mesures erronées.

La pression dynamique ∆P est directement déduite de l'écart entre la pression statique Ps et la pression d'arrêt Pt mesurées.

La pression dynamique permet alors de calculer la vitesse conventionnelle Vc.

La vitesse air vraie à l'infini amont V et la température d'impact permettent de déterminer le nombre de mach M et la température statique T.

Comme précédemment, la masse volumique de l'air e est établie à partir de la pression statique locale Ps et la température statique T.

Selon un mode de réalisation préféré de l'invention, les anémomètres lasers sont fibrés. Un anémomètre fibré utilise alors une source de puissance distante à laquelle il est relié par une fibre optique. Il est alors possible d'utiliser une pluralité d'anémomètres lasers reliés à la même source de puissance.

Ainsi, chacun des anémomètres lasers étant relié, par une fibre optique, à une même source de puissance.

Ce mode de réalisation a pour avantage d'être plus facile à mettre en oeuvre et plus économique.

## Revendications

**1.** Système pour la détermination du vecteur vitesse air vraie, défini par un module et par une direction, d'un aéronef comportant un fuselage (101), ledit système comportant:

- un premier, deuxième, troisième, quatrième, cinquième et sixième anémomètres laser (401, 402, 403, 404, 405 et 406) chacun pourvu d'une unique voie de mesure pour mesurer une composante locale de la vitesse air vraie et étant répartis dans des localisations différentes autour du fuselage (101) de l'aéronef,

ledit système étant **caractérisé en ce que** :

- lesdits anémomètres lasers sont configurés pour réaliser des mesures locales avec un point de focalisation à une distance inférieure à un mètre,
- ledit cinquième anémomètre laser (405) est situé à mi-distance entre ledit quatrième (404) et ledit deuxième (402) anémomètre laser et
- ledit sixième anémomètre laser (406) est situé à mi-distance entre ledit quatrième (404) et ledit premier (401) anémomètre laser

ledit système comportant en outre des moyens pour le calcul du module et de la direction du vecteur de la vitesse air vraie de l'aéronef à partir des six mesures de composante locale de la vitesse air vraie, lesdits moyens mettant en oeuvre un tableau de correspondance permettant une corrélation entre les mesures locales et le vecteur vitesse air vraie et prenant donc en compte les perturbation liées à la présence du fuselage.

**2.** Système selon la revendication 1, dans lequel le premier (401) et le deuxième (402) des six anémomètres lasers sont situés sensiblement dans le plan horizontal de l'aéronef et de façon symétrique par rapport à l'axe longitudinal (102) de l'aéronef.

**3.** Système selon l'une des revendications 1 ou 2, dans lequel le troisième (403) et le quatrième (404) des six anémomètres lasers sont situés sensiblement dans le plan vertical de l'aéronef et de façon symétrique par rapport à l'axe longitudinal (102) de l'aéronef.

**4.** Système selon l'une des revendications précédentes, dans lequel l'axe selon lequel est effectué la mesure est un axe situé dans un plan parallèle au plan tangent au fuselage, ledit axe de mesure formant un angle D avec l'axe situé dans plan parallèle au plan tangent au fuselage et parallèle à l'axe longitudinal du fuselage.

**5.** Système selon la revendication 4, dans lequel l'angle D entre l'axe de mesure et l'axe situé dans plan parallèle au plan tangent au fuselage et parallèle à l'axe longitudinal du fuselage est sensiblement égal à 45 degrés.

6. Système selon l'une des revendications précédentes, dans lequel les anémomètres lasers sont fibrés, chacun des anémomètres lasers étant relié, par une fibre optique, à une même source de puissance.

**Patentansprüche**

1. System zum Bestimmen des wahren Luftgeschwindigkeitsvektors, definiert durch ein Modul und durch eine Richtung, eines Luftfahrzeugs mit einem Rumpf (101), wobei das System Folgendes umfasst:

ein erstes, zweites, drittes, viertes, fünftes und sechstes Laseranemometer (401, 402, 403, 404, 405 und 406) jeweils mit einem einzigen Messkanal zum Messen einer lokalen Komponente der wahren Luftgeschwindigkeit, die über verschiedene Stellen über den Rumpf (101) des Luftfahrzeugs verteilt sind, wobei das System **dadurch gekennzeichnet ist, dass**:

die Laseranemometer so konfiguriert sind, dass sie lokale Messungen mit einem Fokussierungspunkt in einem Abstand von weniger als einem Meter durchführen; das fünfte Laseranemometer (405) sich in der Hälfte zwischen dem vierten (404) und dem zweiten (402) Laseranemometer befindet, und das sechste Laseranemometer (406) sich in der Hälfte zwischen dem vierten (404) und dem ersten (401) Laseranemometer befindet, wobei das System ferner Mittel zum Berechnen des Moduls und der Richtung des Vektors der wahren Luftgeschwindigkeit des Luftfahrzeugs auf der Basis der sechs lokalen Komponentenmessungen der wahren Luftgeschwindigkeit umfasst, wobei die Mittel eine Korrespondenztabelle implementieren, die eine Korrelation zwischen den lokalen Messungen und dem wahren Luftgeschwindigkeitsvektor und somit eine Berücksichtigung der mit der Anwesenheit des Rumpfs assoziierten Störungen zulässt.

2. System nach Anspruch 1, wobei das erste (401) und das zweite (402) Laseranemometer der sechs Laseranemometer sich im Wesentlichen in der Horizontalebene des Luftfahrzeugs befinden und symmetrisch relativ zur Längsachse (102) des Luftfahrzeugs befinden.

3. System nach Anspruch 1 oder 2, wobei das dritte (403) und das vierte (404) Laseranemometer der sechs Laseranemometer sich im Wesentlichen in der vertikalen Ebene des Luftfahrzeugs und symmetrisch relativ zur Längsachse (102) des Luftfahrzeugs befinden.

4. System nach einem der vorherigen Ansprüche, wobei die Achse, entlang derer die Messung durchgeführt wird, eine Achse ist, die sich in einer Ebene parallel zur Tangentialebene des Rumpfes befindet, wobei die Messachse einen Winkel D mit der Achse bildet, die sich in der Ebene parallel zur Tangentialebene des Rumpfs und parallel zur Längsachse des Rumpfs befindet.

5. System nach Anspruch 4, wobei der Winkel D zwischen der Messachse und der Achse, die sich in der Ebene parallel zur Tangentialebene des Rumpfs und parallel zur Längsachse des Rumpfs befindet, im Wesentlichen gleich 45 Grad ist.

6. System nach einem der vorherigen Ansprüche, wobei die Laseranemometer gefasert sind, wobei jedes der Laseranemometer durch eine optische Faser mit derselben Stromquelle verbunden ist.

**Claims**

1. A system for determining the true air speed vector, defined by a modulus and by a direction, of an aircraft comprising a fuselage (101), said system comprising:

a first, second, third, fourth, fifth and sixth laser anemometer (401, 402, 403, 404, 405 and 406) each provided with a single measurement channel for measuring a local component of the true air speed and being distributed over various locations around said fuselage (101) of the aircraft, said system being **characterised in that**:

said laser anemometers are configured so as to carry out local measurements with a focusing point at a distance of less than one metre; said fifth laser anemometer (405) is located halfway between said fourth (404) and said second (402) laser anemometer and said sixth laser anemometer (406) is located halfway between said fourth (404) and said first (404) laser anemometer, said system further comprising means for calculating the modulus and the direction of the vector of the true air speed of the aircraft on the basis of the six local component measurements of the true air speed, said means implementing a table of correspondence allowing a correlation to be made between the local measurements and the true air speed vector and thus taking into account the disruptions associated with the presence of the fuselage.

2. The system according to claim 1, wherein the first (401) and the second (402) laser anemometers of the six laser anemometers are substantially located in the horizontal plane of the aircraft and are symmetrically located relative to the longitudinal axis (102) of the aircraft.

3. The system according to claim 1 or 2, wherein the third (403) and the fourth (404) laser anemometers of the six laser anemometers are substantially located in the vertical plane of the aircraft and are symmetrically located relative to the longitudinal axis (102) of the aircraft.

4. The system according to any one of the preceding claims, wherein the axis along which the measurement is carried out is an axis located in a plane parallel to the tangential plane of the fuselage, said measurement axis forming an angle D with the axis located in the plane parallel to the plane tangent to the fuselage and parallel to the longitudinal axis of the fuselage.

5. The system according to claim 4, wherein the angle D between the axis of measurement and the axis located in the plane parallel to the tangential plane of the fuselage and parallel to the longitudinal axis of the fuselage is substantially equal to 45 degrees.

6. The system according to any one of the preceding claims, wherein said laser anemometers are fibre based, with each of said laser anemometers being connected by an optical fibre to the same power source.

FIG.1

101

202

201

FIG.2

FIG.4

FIG.3

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2938924 A1

- FR 2891409 A1